# EUROPÄISCHE PATENTSCHRIFT

(11) **EP 2 096 932 B1**
(45) Veröffentlichungstag und Bekanntmachung des Hinweises auf die Patenterteilung: **31.05.2017**
(21) Anmeldenummer: 07857764.0
(22) Anmeldetag: 18.12.2007
(51) Int. Cl.: A23C 19/05, A01J 25/11, A23C 19/076

(54) **VERFAHREN ZUR HERSTELLUNG VON KÄSE**
METHOD FOR PRODUCING CHEESE
PROCÉDÉ DE PRODUCTION DE FROMAGE

(30) Priorität: 18.12.2006 DE 102006059713
(43) Veröffentlichungstag der Anmeldung: 09.09.2009
(73) Patentinhaber: GEA Mechanical Equipment GmbH, 59302 Oelde (DE)
(72) Erfinder: HÜLLMANN, Markus, 33378 Rheda-Wiedenbrück (DE)
(74) Vertreter: Dantz, Jan Henning
(86) Internationale Anmeldenummer: PCT/EP2007/064139
(87) Internationale Veröffentlichungsnummer: WO 2008/074802

(56) Entgegenhaltungen:
- EP-A- 0 351 539
- EP-A- 0 440 208
- EP-A- 1 642 494
- DE-A1- 2 636 882
- DE-C1- 3 924 372
- DE-U1- 20 010 743
- US-A- 4 713 254
- US-A1- 2004 224 069
- SHAH, C.M. ET AL.: "Dewatering of Casein Curd - A Review" INDIAN DAIRYMAN, Bd. 39, Nr. 10, 1987, Seiten 471-475, XP008090128

## Beschreibung

Die Erfindung betrifft ein Verfahren zur Herstellung von Käse nach den Merkmalen a) und b) des Anspruchs 1.

Die EP 1 642 494 A1 thematisiert ein Verfahren und eine Vorrichtung zur Herstellung eines Frischkäsekonzentrates mit hohem Trockenmassegehalt. Die D1 offenbart ein Verfahren zum Herstellen eines Käsebruches, welches wirtschaftlich und unter Hygiene-Gesichtspunkten Verbesserungen mit sich bringt. Dabei wird dickgelegte Milch in einer Trenneinrichtung, z.B. einem Düsenseparator, in eine wässrige Phase und ein Feststoffkonzentrat getrennt. Anschließend wird der Käsebruch über eine Erhitzungseinheit geleitet und schließlich in eine Vollmantel-Schneckenzentrifuge überführt, in der ein Aufkonzentrieren in ein proteinreiches, wasserarmes Quarkkonzentrat erfolgt. Sonstige Trenneinrichtungen, die anstelle eines Düsenseparators eingesetzt werden können, sind eine Schulenburgwanne, eine Siebzentrifuge oder Quarksäcke.

Die US 4 713 254 offenbart zunächst die Überführung von Milch in einen Tank mit einem Rührwerk, in welchem der pH-Wert auf einen pH-Wert von 4,74 eingestellt wird. Dabei erfolgt in der Milch eine Fällung unter Bildung einer niedrigviskosen Flüssigkeit bzw. Milchschlamm. Dieser wird in einen zentrifugalen Separator überführt.

Shah, C.M. et al "Dewatering of Casein Curd - A Review", Indian Dairyman, Bd.39, Nr.10, 1987, S.471-475 offenbart ein Verfahren zum Entwässern von Käsebruch. Dabei werden Untersuchungen von wässrigem Käsebruch beschrieben.

Die DE 39 24 372 C1 offenbart ebenfalls die Herstellung von Quark und Frischkäse. Hierfür wird eine Zentrifuge eingesetzt. Dabei geht es im Wesentlichen um die Entgasung des Quarks, so dass entsprechende Gase entweichen können.

Die EP 0 440 208 A1 offenbart eine zentrifugale Verarbeitung von gesäuerter Milch in Molke und Käsebruch. Hierfür wird eine Zentrifuge genutzt. Vor dem Einleiten der gesäuerten Milch wird die Milch über einen Wärmetauscher geleitet.

Aus dem Stand der Technik ist ein solches Verfahren bekannt, bei dem zunächst Käsereimilch (Kesselmilch) in Käsefertigern dickgelegt wird, was z.B. mit Hilfe von Lan und unter Verwendung geringer Mengen CaCl₂ erfolgen kann. Häufig werden der Kesselmilch auch ein Kulturenkonzentrat zur geschmacklichen Beeinflussung des Endproduktes und β-Karotin zur Farbgebung des Käses beigesetzt.

Nach der Dicklegung, die in der Regel ca. 30 min dauert, entsteht ein Gel bzw. eine Gallerte durch Aufspaltung in Para-Kappa-Casein und Lykomakropeptid, die aus Käsebruch und Molke besteht.

Diese Gallerte wird bei der maschinellen Verarbeitung durch speziell konfigurierte Rühr- und Schneidmesser in Käsefertigern, je nach Käseart, auf etwa Fingernagelgröße geschnitten.

Dabei tritt Molke (Käsewasser) aus, die aus den Käsefertigern abgesaugt, abgeführt und teilweise durch warmes bis heißes Wasser zur Trockenmassereduzierung ersetzt wird.

Das Bruch-Molke-Gemisch wird nun schonend über einen Vorlagebehälter in Behältnisse (Vorpresswannen oder Casomatic) gefördert.

Der derart komprimierte Käsebruch wird durch statischen Druck nach unten gefördert und die Molke wird nach oben abgefüllt.

Der dabei erhaltene Käsebruch wird nun am unteren Ende dieser Behältnisse in Formen abgefüllt und anschließend - meist vor dem Salzen - in Käseformen gepresst.

Nach dieser Pressung und einer Salzung werden die fertigen Käseblöcke entweder in Folien verpackt oder gelangen unter speziellen klimatischen Bedingungen in Reifungsräume. Nach einer Reifung und der handelsüblichen Verpackung ist der Käse konsumfertig.

Dieses Verfahren hat sich an sich bewährt. Es soll aber derart verbessert werden, dass auf einfache Weise die Molkeverluste verringert und die Molkequalität erhöht wird.

Die Lösung dieses Problems ist die Aufgabe der Erfindung.

Die Erfindung löst diese Aufgabe durch den Gegenstand des Anspruchs 1.

Vorteilhafte Ausgestaltungen sind den Unteransprüchen zu entnehmen.

Das erfindungsgemäße Verfahren ersetzt die nach dem Stand der Technik notwendigen Behältnisse für das Bruch-Käsegemisch zur Bruchabfüllung durch Dekanter (Vollmantel-Schneckenzentrifugen). Der Einsatz eines Dekanters ist zwar an sich im Bereich der Milchverarbeitung bekannt, so aus einem Verfahren zur Herstellung von Quarkriegeln. Dennoch wurde sein Einsatz im vorliegenden Verfahren bisher nicht angedacht, obwohl er deutliche Vorteile gegenüber dem bekannten Verfahren des Einsatzes von Presswannen mit sich bringt. So ermöglichen Dekanter eine einfache und weitgehend gleich bleibend optimale Einstellung der Trockenmasse, was in einer Reduzierung der Molkeverluste resultiert. Insgesamt ergibt sich auch eine optimale Molkequalität, was ein Indikator für einen guten Käseherstellungsprozeß ist. Auch die Molke kann zudem aufgrund ihrer Qualität hochwertig weiterverarbeitet werden.

Vorzugsweise wird die Zulaufmenge, die Drehzahl und/oder die Differenzdrehzahl des Dekanters in Abhängigkeit von der Qualität der Klarphase - Molke - geregelt, insbesondere derart, dass man, bezogen auf den Trennprozess, einen möglichst geringen Anteil abschleuderbarer Feststoffe, den so genannten Käsestaub, erhält. Anzustreben sind Käsestaubanteile der Molke von weniger als 0,3%, vorzugsweise weniger als 0,2 %. Größere Mengen von Käsefeinstpartikeln führen zu Ausbeuteverlusten und zu diversen Problemen bei der Weiterverarbeitung der Molke, die erfindungsgemäß vermieden werden können (verstopfte Filter und Membranen, unzureichende Molkeentrahmung). Mit der Erfindung ist dies erreichbar.

Als besonders geeignet erscheint auch der Einsatz eines Zwei-Getriebeantriebes mit einer Differenzdrehzahleinstellung. Der Einsatz eines Zwei-Getriebeantriebes mit einer Differenzdrehzahleinstellung erscheint deshalb vorteilhaft, da im Betrieb eine einfache und genaue Regelung der Differenzdrehzahl möglich ist.

Ergänzend vorteilhaft ist es, wenn der eingesetzte Dekanter im Bereich seines Flüssigkeitsablaufs mit einer Drosseleinrichtung versehen ist, welche ein Androsseln dieses Flüssigkeitsauslasses erlaubt. Insbesondere beim Einsatz eines derartigen Dekanters ergibt sich eine optimale Molkequalität mit einem nur geringen Käsestaubgehalt. Als Drosseleinrichtungen geeignet sind beispielsweise Drosselscheiben und/oder eine Schälscheibenausführung. Diese Varianten gewährleisten optimale Verfahrenseigenschaften auch der ggf. noch nachgeschalteten Vorrichtungen, die Molkeklärseparato.. ren, Molkeentrahmungsseparatoren und/oder Filtrationseinrichtungen zur Herstellung hochwertiger Molkeproteinkonzentrate umfassen können.

Durch den Einsatz des Dekanters wird zudem der Platzbedarf im Vergleich zu den bekannten Lösungen verringert.

Gleiches gilt für den Energieverbrauch.

Verbessert werden zudem die hygienischen Verhältnisse, insbesondere bei Einsatz einer sanitären Ausführung (z.B. einer USDA-Ausführung).

Nachfolgend wird die Erfindung unter Bezug auf die Zeichnung anhand von Ausführungsbeispielen näher erläutert. Es zeigt:

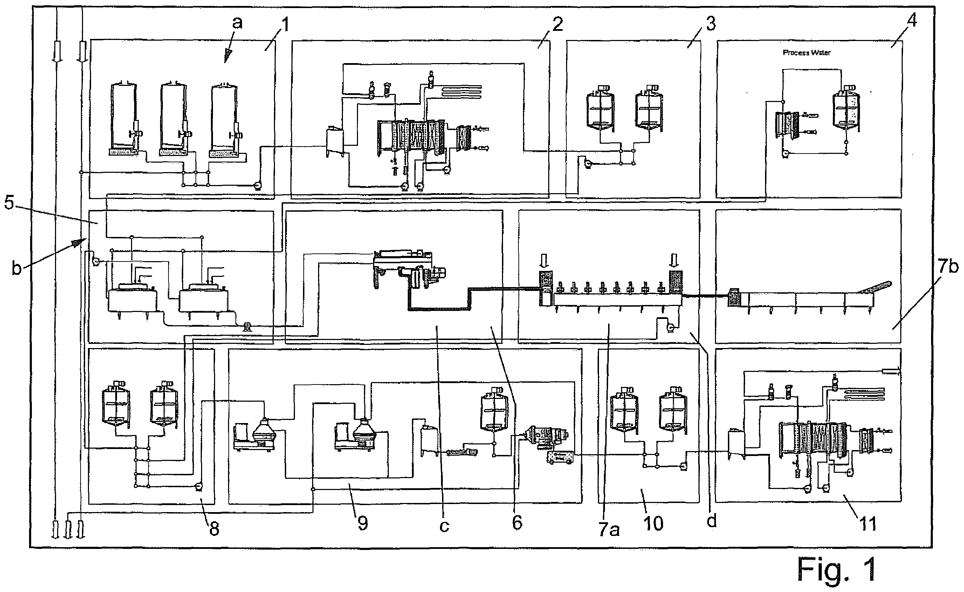

Fig. 1 ein erfindungsgemäßes Verfahren zur Herstellung von Käse.

Im Schritt a) (Bilder 1, 2, 3) wird Käsereimilch in Käsefertigern dickgelegt. Dabei entsteht eine Gallerte aus Käsebruch und Molke.

Dieser Käsebruch wird zur Abtrennung der Molke zunächst durch speziell konfigurierte Rühr- und Schneidmesser in Käsefertigern (Schritt b) geschnitten. Dabei tritt bereits ein Teil Molke (Käsewasser) aus, die aus den Käsefertigern abgesaugt, abgeführt und teilweise durch warmes bis heißes Wasser zur Trockenmassereduzierung ersetzt wird (Bilder 4, 5).

Das derart vorgeschnittene Bruch-Molke-Gemisch wird in einen Dekanter (Schritt c) gefördert, wo vom Käsebruch weitere Molke abgetrennt wird (Bild 6).

Im Dekanter bietet es sich an, die Zulaufmenge, die Drehzahl und/oder die Differenzdrehzahl in Abhängigkeit von der Qualität der Klarphase - der Molke - zu regeln.

Zudem ist es vorteilhaft, eine Regelung der Zulaufmenge, der Drehzahl und/oder der Differenzdrehzahl in Abhängigkeit des aufgenommenen Drehmomentes vorzunehmen, um Qualitätsunterschiede im Zulauf auszugleichen.

Der dabei aus dem Dekanter geförderte Käsebruch als Feststoff - meist vor dem Salzen - kann direkt in Käseformen gepresst werden - Schritt d). Nach dem Pressen und der Salzung werden die fertigen Käseblöcke entweder in Folien verpackt oder gelangen unter speziellen klimatischen Bedingungen in Reifungsräume. Nach einer Reifung und der handelsüblichen Verpackung ist der Käse konsumfertig (Bild 7a, 7b).

Die Molke kann dagegen in Sammeltanks (Bild 8) gesammelt und dann in weiteren Vorrichtungen wie Separatoren und Dekantem (Schritt e) und dgl. weiter verarbeitet werden (Bild 9), wobei in der Regel Rahm aus der Molke abgetrennt und verarbeitet wird (Bild 10,11). Die Molke hat eine genügende Qualität zur hochwertigen Weiterverarbeitung.

Unter einer genügenden Qualität der Klarphase ist zu verstehen, dass in der Molke weniger als 0,3%, insbesondere weniger als 0,2 % abschleuderbare Feststoffe enthalten sind.

Vorzugsweise wird der Dekanter derart gefahren, dass der Trockenmassegehalt des Käses zwischen 40% bis 50%, je nach Käsesorte, beträgt.

Vorteilhaft weist der Dekanter ferner ein sanitäres Design auf, bei dem alle das Produkt berührenden Bereiche aus nicht rostendem Stahl bestehen und bei dem die Konstruktion weitgehend spaltfrei ausgestaltet ist, insbesondere auch im Bereich von Dichtungen.

Es kann insbesondere auch ein Dekanter eingesetzt werden, dessen Schnecke in Richtung des Flüssigkeitsauslasses ein Tellerpaket nachgeschaltet ist, um weitere Feststoffe aus der Molke zu entfernen (hier nicht dargestellt).

## Patentansprüche

1. Verfahren zur Herstellung von Käse, bei dem
a. aus Käsereimilch (Kesselmilch) durch Dicklegung ein gelartiges Käsebruch-/Molkegemisch erzeugt wird,
b. das Käsebruch-/Molkegemisch in Käsefertigern geschnitten wird, wobei Molke aus dem Käsebruch austritt,
c. der Käsebruch aus Schritt b) in einen Dekanter - eine Vollmantel-Schneckenzentrifuge - gefördert wird, wo es in einen weiter entwässerten Käsebruch und Molke getrennt wird, und
d. der aus dem Dekanter geförderte Käsebruch zu Käse gepresst wird.

2. Verfahren nach Anspruch 1, **dadurch gekennzeichnet, dass** mittels einer Drosselrichtung des Dekanters und einer Regelungseinrichtung eine Regelung der Trockengehaltes des Käsebruchs erfolgt.

3. Verfahren nach Anspruch 2, **dadurch gekennzeichnet, dass** die Regelung mittels einer Drosselscheibe und/oder eine Schälscheibe als Drosseleinrichtung erfolgt.

4. Verfahren nach Anspruch 1, 2 oder 3, **dadurch gekennzeichnet, dass** ein Dekanter mit einem Zweigetriebeantrieb verwendet wird.

5. Verfahren nach einem der vorstehenden Ansprüche, **dadurch gekennzeichnet, dass** die Zulaufmenge des Dekanters in Abhängigkeit von der Qualität der Klarphase - Molke - geregelt wird.

6. Verfahren nach einem der vorstehenden Ansprüche, **dadurch gekennzeichnet, dass** die Drehzahl des Dekanters in Abhängigkeit von der Qualität der Klarphase - Molke - geregelt wird.

7. Verfahren nach einem der vorstehenden Ansprüche, **dadurch gekennzeichnet, dass** die Differenzdrehzahl des Dekanters in Abhängigkeit von der Qualität der Klarphase - Molke - geregelt wird.

8. Verfahren nach einem der vorstehenden Ansprüche, **dadurch gekennzeichnet, dass** die Zulaufmenge, die Drehzahl und/oder die Differenzdrehzahl des Dekanters in Abhängigkeit von der Qualität der Klarphase - Molke - derart geregelt wird, dass der Anteil abschleuderbarer Feststoffe in der Molke weniger als 0,3% , vorzugsweise weniger als 0, 2% beträgt.

9. Verfahren nach einem der vorstehenden Ansprüche, **dadurch gekennzeichnet, dass** im Schritt c) eine Regelung der Zulaufmenge, der Drehzahl und/oder der Differenzdrehzahl in Abhängigkeit des aufgenommenen Drehmomentes erfolgt.

10. Verfahren nach einem der vorstehenden Ansprüche, **dadurch gekennzeichnet, dass** der Dekanter derart gefahren wird, dass die Trockenmasse des Käses zwischen 40% bis 50%, je nach Käsesorte, beträgt.

11. Verfahren nach einem der vorstehenden Ansprüche, **dadurch gekennzeichnet, dass** der Dekanter ein sanitäres Design aufweist.

12. Verfahren nach einem der vorstehenden Ansprüche, **dadurch gekennzeichnet, dass** der Schnecke des Dekanters in Richtung des Flüssigkeitsauslasses ein Tellerpaktes nachgeschaltet ist, um weitere Feststoffe aus der Molke zu entfernen.

## Claims

1. A method for producing cheese, wherein
a) a gel-like curd/whey mixture is produced from dairy milk (skimmed milk/cream mixture) by coagulation,
b) the curd/whey mixture is then cut in cheese processors, wherein the whey is separated from the curd,
c) the curd from step b) is conveyed into a decanter, i.e. a solid bowl worm centrifuge, where it is separated into further drained curd and whey, and
d) the curd that is conveyed out of the decanter is pressed into cheese.

2. A method according to claim 1, **characterized in that** a control of the dry matter content of the curd occurs by means of a throttling device of the decanter and a control device.

3. A method according to claim 2, **characterized in that** the control occurs by means of a throttle disc and/or skimmer disc as the throttling device.

4. A method according to claim 1, 2 or 3, **characterized in that** a decanter with a dual-gear drive is used.

5. A method according to one of the preceding claims, **characterized in that** the inflow quantity of the decanter is controlled depending on the quality of the clear phase, i.e. the whey.

6. A method according to one of the preceding claims, **characterized in that** the rotational speed of the decanter is controlled depending on the quality of the clear phase, i.e. the whey.

7. A method according to one of the preceding claims, **characterized in that** the differential rotational speed of the decanter is controlled depending on the quality of the clear phase, i.e. the whey.

8. A method according to one of the preceding claims, **characterized in that** the inflow quantity, rotational speed and/or the differential rotational speed of the decanter is controlled depending on the quality of the clear phase, i.e. the whey, in such a way that the fraction of ejectable solids in the whey is less than 0.3%, preferably less than 0.2%.

9. A method according to one of the preceding claims, **characterized in that** a control of the inflow quantity, the rotational speed and/or the differential rotational speed occurs in step c) depending on the absorbed torque.

10. A method according to one of the preceding claims, **characterized in that** the decanter is driven in such a way that the dry matter of the cheese is between 40% to 50%, depending on the type of cheese.

11. A method according to one of the preceding claims, **characterized in that** the decanter has a sanitary design.

12. A method according to one of the preceding claims, **characterized in that** the worm of the decanter is provided downstream in the direction of the liquid outlet with a disc stack in order to remove further solids from the whey.

## Revendications

1. Procédé pour la fabrication de fromage, dans lequel
a. un mélange de caillé et de petit-lait formant un gel est produit par fermentation de lait de fromagerie,
b. le mélange de caillé et de petit-lait est fragmenté dans des cuves à fromage de sorte que le petit-lait s'échappe du caillé,
c. le caillé de l'étape b) est transporté dans un décanteur (une centrifugeuse à vis sans fin à bol plein) dans lequel il est séparé en caillé encore plus déshydraté et petit-lait, et
d. le petit-lait sortant du décanteur est pressé pour obtenir du fromage.

2. Procédé selon la revendication 1, **caractérisé en ce qu'**un dispositif d'étranglement du décanteur et un dispositif de régulation permettent de réguler la teneur en matière sèche du caillé.

3. Procédé selon la revendication 2, **caractérisé en ce que** la régulation est réalisée au moyen d'un disque d'étranglement et/ou d'un disque racleur servant de dispositif d'étranglement.

4. Procédé selon la revendication 1, 2 ou 3, **caractérisé en ce qu'**un décanteur muni d'un entraînement à double transmission est utilisé.

5. Procédé selon l'une des revendications précédentes, **caractérisé en ce que** la quantité amenée dans le décanteur est régulée en fonction de la qualité de la phase claire (petit-lait).

6. Procédé selon l'une des revendications précédentes, **caractérisé en ce que** la vitesse de rotation du décanteur est régulée en fonction de la qualité de la phase claire (petit-lait).

7. Procédé selon l'une des revendications précédentes, **caractérisé en ce que** la vitesse de rotation différentielle du décanteur est régulée en fonction de la qualité de la phase claire (petit-lait).

8. Procédé selon l'une des revendications précédentes, **caractérisé en ce que** la quantité amenée, la vitesse de rotation et/ou la vitesse de rotation différentielle du décanteur sont régulées en fonction de la qualité de la phase claire (petit-lait) de telle manière que la part de solides pouvant être centrifugés dans le petit-lait soit inférieure à 0,3 %, de préférence inférieure à 0,2 %.

9. Procédé selon l'une des revendications précédentes, **caractérisé en ce que** la quantité amenée, la vitesse de rotation et/ou la vitesse de rotation différentielle sont régulées dans l'étape c) en fonction du couple absorbé.

10. Procédé selon l'une des revendications précédentes, **caractérisé en ce que** le décanteur est conduit de telle façon que la matière sèche du fromage représente entre 40 % et 50 %, selon le type de fromage.

11. Procédé selon l'une des revendications précédentes, **caractérisé en ce que** le décanteur est conçu selon des principes sanitaires.

12. Procédé selon l'une des revendications précédentes, **caractérisé en ce que** la vis sans fin du décanteur est suivie d'un paquet de disques dans le sens de la sortie du liquide, afin d'arrêter encore d'autres matières solides présentes dans le petit-lait.
